(19) Europäisches Patentamt European Patent Office Office européen des brevets

(11) **EP 4 779 355 A1**

(12) **EUROPEAN PATENT APPLICATION**

(43) Date of publication:
**22.07.2026 Bulletin 2026/30**

(21) Application number: **26152647.9**

(22) Date of filing: **19.01.2026**

(51) International Patent Classification (IPC):
**G01S 7/487** (2006.01)     **G01S 7/4865** (2020.01)
**G01S 17/10** (2020.01)     **G01S 17/931** (2020.01)

(52) Cooperative Patent Classification (CPC):
**G01S 7/487; G01S 7/4865; G01S 17/10;**
G01S 7/4876; G01S 17/931

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.01.2025 CN 202510099626**

(71) Applicant: **Suteng Innovation Technology Co., Ltd Shenzhen City Guangdong 518000 (CN)**

(72) Inventor: **GONG, Changsheng Shenzhen City (CN)**

(74) Representative: **Ran, Handong et al Maucher Jenkins Seventh Floor Offices Artillery House 11-19 Artillery Row London SW1P 1RT (GB)**

(54) **ECHO SIGNAL PROCESSING METHOD, APPARATUS, TERMINAL DEVICE, AND COMPUTER PROGRAM PRODUCT**

(57) The present application provides an echo signal processing method. The method includes: acquiring single histograms obtained from at least two scans; acquiring a superimposed histogram according to the single histograms; respectively extracting echo information of the superimposed histogram and echo information of target single histograms; calculating an echo similarity of each echo in the superimposed histogram and an echo similarity of corresponding echoes between the target single histograms according to the echo information of the superimposed histogram and the echo information of the target single histograms; determining an echo confidence level of each echo in the superimposed histogram according to the echo similarity of the echoes in the superimposed histogram and the echo similarity between the target single histograms; and identifying a valid echo according to the echo confidence level of the echo. This improves the identification accuracy of a radar system for noise signals and crosstalk echoes.

FIG. 3

EP 4 779 355 A1

**Description**

## TECHNICAL FIELD

The present application belongs to the technical field of radar, and in particular, to an echo signal processing method, apparatus, terminal device, and computer program product.

## BACKGROUND

LiDAR is a radar system that emits laser beams to detect information such as the position and speed of a target. In addition to detecting the distance of an object, it can also detect the reflectivity of the object for target identification. The specific working principle of LiDAR is to emit a detection signal towards the target. After the detection signal reaches the target, it is reflected by the target object, thereby forming echo data. The LiDAR receives the signal (echo data) reflected back from the target, and then determines relevant information about the target based on the echo data, such as target distance, position, altitude, speed, attitude, shape, reflectivity, etc., thereby achieving target detection, target tracking, and target identification.

Since the echo signal received by the LiDAR may include not only the effective echo signal reflected from the target object but also crosstalk signals and noise signals, crosstalk signals and noise signals can affect the accuracy of target identification. Therefore, how to improve the detection rate and identification accuracy of crosstalk signals and noise signals is an urgent problem to be solved.

## SUMMARY

Embodiments of the present application provide an echo signal processing method, apparatus, terminal device, and computer program product, which can improve the identification accuracy of a radar system for noise signals and crosstalk echoes.

In a first aspect, an embodiment of the present application provides an echo signal processing method, comprising:

acquiring single histograms obtained from at least two scans;
acquiring a superimposed histogram according to the single histograms;
respectively extracting echo information of the superimposed histogram and echo information of target single histograms;
calculating an echo similarity of each echo in the superimposed histogram, and an echo similarity of corresponding echoes between the target single histograms, according to the echo information of the superimposed histogram and the echo information of the target single histograms;
determining an echo confidence level of each echo in the superimposed histogram according to the echo similarity of the echoes in the superimposed histogram and the echo similarity between the target single histograms; and
identifying a valid echo according to the echo confidence level of the echo.

In an implementation of the first aspect, the echo information comprises an echo amplitude and an echo timing moment; and the calculating the echo similarity of each echo in the superimposed histogram according to the echo information of the superimposed histogram and the echo information of the target single histograms comprises:

determining a temporal similarity of the echo according to the echo timing moment of each echo in the superimposed histogram and the echo timing moment of a corresponding echo in the target single histograms; and
determining an amplitude similarity of the echo according to the echo amplitude of each echo in the superimposed histogram and the echo amplitude of the corresponding echo in the target single histograms.

In an implementation of the first aspect, the calculating the echo similarity of each echo in the superimposed histogram according to the echo information of the superimposed histogram and the echo information of the target single histograms comprises:

if an absolute value of a difference between an echo timing moment of an echo in an i-th target single histogram and an echo timing moment of a corresponding echo in the superimposed histogram is less than a first preset time threshold, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not 0, then the similarity of the echo is determined as 1; wherein i is a positive integer.

In an implementation of the first aspect, the echo information comprises: an echo start moment and an echo end moment; and the calculating the echo similarity of each echo in the superimposed histogram according to the echo information of the superimposed histogram and the echo information of the target single histograms comprises:

if an echo timing moment of an echo in an i-th single histogram falls within a range between an echo start moment and an echo end moment of a corresponding echo in the superimposed histogram, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not 0, then the similarity of the echo is determined as 1; wherein i is a positive integer.

In an implementation of the first aspect, the calculating the echo similarity of corresponding echoes between the target single histograms comprises:

if an absolute value of a difference between an echo timing moment of an echo in an i-th target single histogram and an echo timing moment of a corresponding echo in a j-th target single histogram is less than a second preset time threshold, an absolute value of a difference between a product of an echo amplitude of the i-th target single histogram and an amplitude gain coefficient and an echo amplitude of the corresponding echo in the j-th target single histogram is less than a second preset amplitude threshold, and the echo amplitude of the echo in the i-th target single histogram is not 0, and the echo amplitude of the echo in the j-th target single histogram is not 0, then determining an echo similarity between the echo in the i-th target single histogram and the corresponding echo in the j-th target single histogram as 1; wherein i and j are positive integers, and $i \neq j$.

In an implementation of the first aspect, the determining the echo confidence level of each echo in the superimposed histogram according to the echo similarity of the echoes in the superimposed histogram and the echo similarity between the target single histograms comprises:

determining a confidence level grade of the echo according to the echo similarity of the echoes in the superimposed histogram and the echo similarity between the target single histograms; and
determining the echo confidence level of the echo according to the confidence level grade of the echo.

In an implementation of the first aspect, the identifying a valid echo according to the echo confidence level of the echo comprises:

determining a number of echoes whose echo confidence level is greater than a preset confidence threshold; and
if the number of echoes whose echo confidence level is greater than the preset confidence threshold is greater than a count threshold, determining top k echoes with higher echo confidence levels as valid echoes, wherein k is a positive integer.

In a second aspect, an embodiment of the present application provides an echo data processing apparatus, comprising:

an acquisition module, configured to acquire single histograms obtained from at least two scans; wherein the single histogram is a histogram formed from echo signals obtained by performing at least two scans on the same scanning channel;
a superimposition module, configured to acquire a superimposed histogram according to the single histograms;
an extraction module, configured to respectively extract echo information of the superimposed histogram and echo information of target single histograms;
a calculation module, configured to calculate an echo similarity of each echo in the superimposed histogram, and an echo similarity of corresponding echoes between the target single histograms, according to the echo information of the superimposed histogram and the echo information of the target single histograms;
a determination module, configured to determine an echo confidence level of each echo in the superimposed histogram according to the echo similarity of the echoes in the superimposed histogram and the echo similarity between the target single histograms; and
an identification module, configured to identify a valid echo according to the echo confidence level of the echo.

In a third aspect, an embodiment of the present application provides a terminal device, wherein the terminal device comprises a processor, a memory, and a computer program stored in the memory and executable on the processor. The processor, when executing the computer program, implements the method according to the first aspect or any optional implementation of the first aspect.

In a fourth aspect, an embodiment of the present application provides a computer-readable storage medium, wherein the computer-readable storage medium stores a computer program. The computer program, when executed by a processor, implements the method according to the first aspect or any optional implementation of the first aspect.

In a fifth aspect, an embodiment of the present application provides a computer program product. When the computer program product runs on a terminal device, the terminal device is caused to execute the method according to the first aspect or any optional implementation of the first aspect.

Beneficial effects of the embodiments of the present application compared to the prior art are as follows:

The echo signal processing method, apparatus, terminal device, and computer program product provided by the embodiments of the present application adopt a method of calculating the echo similarity between single histograms and the echo similarity between a single histogram and a superimposed histogram to quantify the confidence level of an echo being a crosstalk echo or a noise signal. This can improve the identification accuracy of a radar system for noise signals and crosstalk echoes, enhance the ability of the radar system to resist interference from crosstalk echoes and noise signals, and improve the detection performance of the radar system.

**BRIEF DESCRIPTION OF DRAWINGS**

To describe the technical solutions in the embodiments of the present application more clearly, the following briefly introduces the accompanying drawings required for describing the embodiments or the prior art. Obviously, the accompanying drawings in the following description show merely some embodiments of the present application, and a person of ordinary skill in the art may still derive other drawings from these accompanying drawings without creative efforts.

FIG. 1 is a schematic diagram of a structure of a LiDAR according to an embodiment of the present application;
FIG. 2 is a schematic diagram of an application scenario of a LiDAR;
FIG. 3 is a schematic flowchart of an implementation of an echo signal processing method provided by an embodiment of the present application;
FIG. 4 is a process schematic diagram of obtaining a superimposed histogram by superimposing single histograms provided by an embodiment of the present application;
FIG. 5 is a process schematic diagram of a superimposed histogram provided by an embodiment of the present application;
FIG. 6 is another process schematic diagram of a superimposed histogram provided by an embodiment of the present application;
FIG. 7 is yet another process schematic diagram of a superimposed histogram provided by an embodiment of the present application;
FIG. 8 is still another process schematic diagram of a superimposed histogram provided by an embodiment of the present application;
FIG. 9 is a schematic diagram of echoes in various histograms during echo signal processing provided by an embodiment of the present application;
FIG. 10 is a schematic diagram of a structure of a terminal device provided by an embodiment of the present application;
FIG. 11 is another schematic diagram of a structure of a terminal device provided by an embodiment of the present application.

**DETAILED DESCRIPTION**

In the following description, specific details such as particular system architectures and techniques are proposed for the purpose of illustration rather than limitation, so as to facilitate a thorough understanding of the embodiments of the present application. However, it will be clear to those skilled in the art that the present application may also be implemented in other embodiments without these specific details. In other instances, detailed descriptions of well-known systems, apparatuses, circuits, and methods are omitted to avoid unnecessary details obscuring the description of the present application.

It should be understood that the term "and/or" used in the description and appended claims of the present application refers to any combination of one or more of the associated listed items and all possible combinations, and includes these combinations. In addition, in the description of the specification and appended claims of the present application, terms such as "first", "second", and "third" are used only for distinguishing descriptions and are not to be construed as indicating or implying relative importance.

It should also be understood that references to "an embodiment", "some embodiments", etc. described in the specification of the present application mean that a particular feature, structure, or characteristic described in connection with the embodiment is included in one or more embodiments of the present application. Thus, phrases such as "in an embodiment", "in some embodiments", "in other embodiments", "in still other embodiments", etc., appearing at different places in this specification do not necessarily all refer to the same embodiment, but mean "one or more but not all embodiments" unless specifically stated otherwise. The terms "include", "comprise", "have" and variations thereof mean "including but not limited to", unless specifically stated otherwise.

LiDAR is a radar system that emits laser beams to detect information such as the position and speed of a target. In addition to detecting the distance of an object, it can also detect the reflectivity of the object for target identification. The specific working principle of LiDAR is to emit a detection signal towards the target. After the detection signal reaches the target, it is reflected by the target object, thereby forming echo data. The LiDAR receives the signal (echo data) reflected back from the target, and then determines relevant information about the target based on the echo data, such as target distance, position, altitude, speed, attitude, shape, reflectivity, etc., thereby achieving target detection, target tracking, and target identification. Among them, the reflectivity of an object refers to the percentage of the radiant energy reflected by the object to the total radiant energy of the incident signal. The reflectivity of different objects is different, and is mainly determined by factors such as the surface properties of the object, the wavelength of the incident signal, and the incident angle.

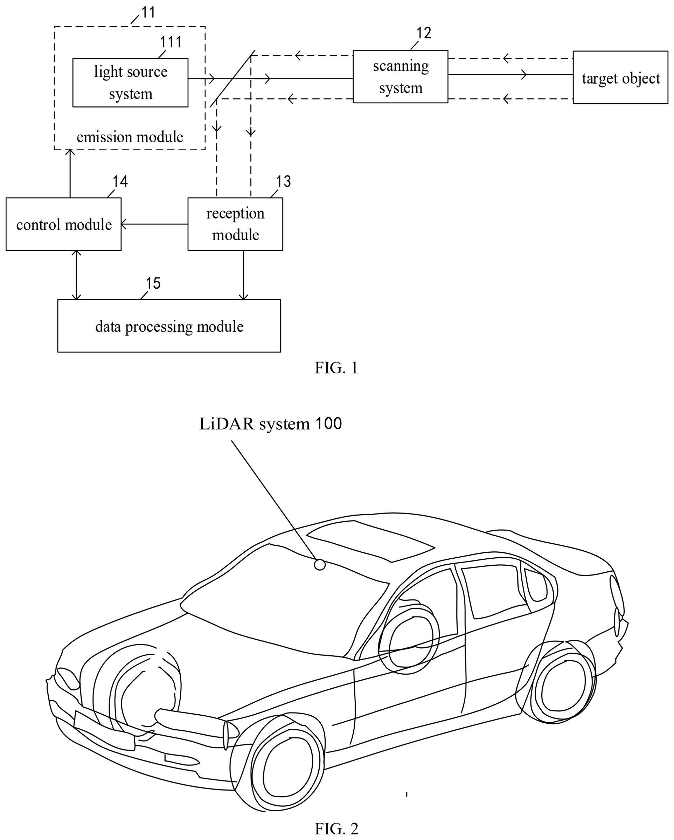

For example, please refer to FIG. 1, which shows a schematic structural diagram of a LiDAR. As shown in FIG. 1, the LiDAR 10 typically includes an emission module 11, a scanning system 12, a reception module 13, a control module 14, and a data processing module 15. The aforementioned emission module 11 may include a light source system 111.

Among them, the light source system 111 is used to generate the laser beam required for detection by the LiDAR 10. Specifically, the light source system 111 may include optical devices such as a laser and an emission lens group. The scanning system 12 is used to angularly deflect the laser beam generated by the light source system 111, allowing the laser beam to hit different positions at different moments. The scanning system 12 can be a mechanical scanning system (i.e., a rotating drive platform), or a semi-solid-state scanning system (i.e., a rotating mirror, a galvanometer, or a combination of both). The present application does not impose a unique limitation on the form of the scanning system.

It can be understood that the LiDAR in the present application may also be a solid-state LiDAR, i.e., scanning is achieved by controlling light sources at different angles to emit light sequentially. After the laser beam emitted by the light source system reaches the target object and is reflected by it, the reflected light pulse is received by the reception sensor 131 in the reception module 13, and then the echo signal is processed by the echo signal processing circuit to generate corresponding detection information.

The aforementioned control module 14 is used to control the LiDAR to emit detection lasers and control the LiDAR to receive echo lasers. The data processing module 15 is used to process the echo data received by the radar and output corresponding detection data.

Since the echo signal received by the LiDAR may include not only the effective echo signal reflected from the target object but also crosstalk signals and noise signals, crosstalk signals and noise signals can affect the accuracy of target identification. Therefore, how to improve the detection rate and identification accuracy of crosstalk signals and noise signals is an urgent problem to be solved.

Based on this, embodiments of the present application provide a LiDAR and an echo signal processing method thereof, which can effectively improve the detection rate and identification accuracy of crosstalk signals and noise signals.

The echo signal processing method provided by the embodiments of the present application will be described in detail below in conjunction with the accompanying drawings:

In a specific application scenario, the aforementioned echo signal processing method can be applied to a LiDAR system. FIG. 2 exemplarily shows a schematic diagram of an application scenario of a LiDAR system provided by an embodiment of the present application. In this example, the LiDAR system 100 can be installed on a vehicle, hence referred to as a vehicle-mounted LiDAR system. The LiDAR can also be installed on other mobile devices, such as mobile robots and ships. The present application does not impose a unique limitation on the type of mobile device.

The LiDAR can be a mechanical LiDAR, a solid-state LiDAR, a semi-solid-state LiDAR, etc. The present application does not impose a unique limitation on this.

The LiDAR in the present application may include a control module and a data processing module. The control module is used to control the LiDAR to emit detection lasers and control the LiDAR to receive echo lasers. The data processing module is used to process the echo data received by the radar and output corresponding detection data.

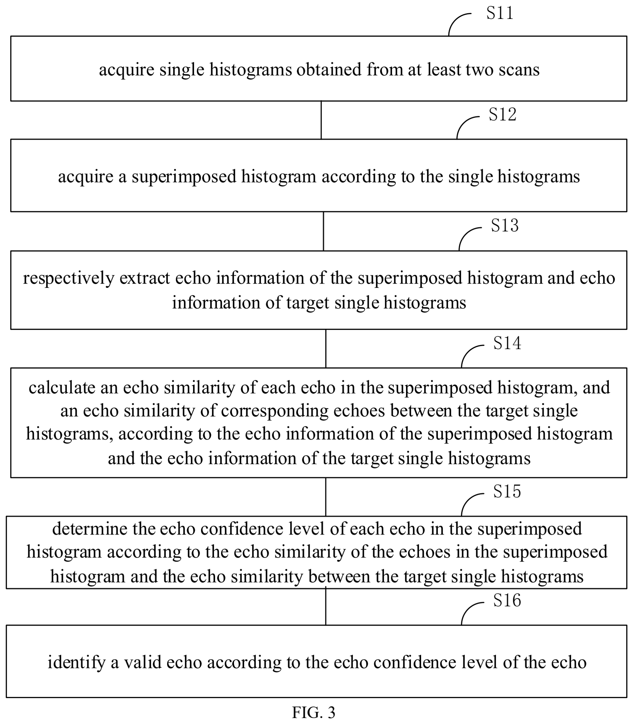

Please refer to FIG. 3, which shows a schematic flowchart of an implementation of an echo signal processing method provided by an embodiment of the present application. It should be noted that the entity executing the echo signal processing method provided by the embodiments of the present application can be the aforementioned LiDAR 10, specifically the data processing module in the LiDAR 10.

Of course, in other embodiments, the entity executing the aforementioned echo signal processing method may also be a terminal device in communication with the LiDAR 10. The terminal device may be a terminal such as a mobile phone, desktop computer, laptop, tablet, or wearable device, or may also be equipment such as a cloud server or radar auxiliary computer in various application scenarios. The present application does not impose specific restrictions on this. The following description takes the data processing module of the LiDAR 10 as the execution entity as an example:

As shown in FIG. 3, the aforementioned echo signal processing method may specifically include S11 to S16.

In S11, acquire single histograms obtained from at least two scans.

In specific applications, the radar system involved in the embodiments of the present application may be a radar system with multiple scanning channels, and within each scanning cycle of the radar system, each scanning channel may be controlled to perform at least two scans.

In the embodiments of the present application, the single histograms obtained from the aforementioned at least two scans refer to histograms formed from echo signals obtained by performing at least two scans on the same scanning channel.

It can be understood that the embodiments of the present application can process the echo data received by each scanning channel according to the echo signal processing method provided by the embodiments of the present application to obtain the effective echo data corresponding to each scanning channel.

The single histogram is a histogram obtained from a single scan. In specific applications, after receiving an echo signal, the radar system can perform distribution statistics on the received echo signal in the time domain or frequency domain, i.e., after performing signal processing on the received echo signal, perform time domain or frequency domain statistics to form a histogram. The single histogram in the embodiments of the present application may be a histogram obtained by performing time-domain distribution statistics on the echo signal received from a single scan.

In other embodiments, the single histogram may also be a histogram obtained by performing frequency-domain distribution statistics on the echo signal received from a single scan. The present application does not impose a unique limitation on this.

In some embodiments, the aforementioned radar system may control a scanning channel to perform two scans within one scanning cycle, thereby obtaining two single histograms corresponding to the two scans. Here, the histogram data obtained from the first scan is called the first single histogram, and the histogram data obtained from the second scan is called the second single histogram.

In some embodiments, the aforementioned radar system may control a scanning channel to perform n scans within one scanning cycle, thereby obtaining n single histograms corresponding to the n scans, referred to as the first single histogram, the second single histogram, ..., the n-th single histogram. Here, n is a positive integer greater than 2.

In the embodiments of the present application, when the radar system is performing a scanning task, the data processing module of the radar system can acquire single histograms obtained from at least two scans. These single histograms may be single histograms corresponding to different scan counts within the same scanning cycle, or single histograms corresponding to different scan counts in different scanning cycles. The following description takes the single histograms obtained from at least two scans as single histograms corresponding to different scan counts within the same scanning cycle as an example for illustrative purposes of the echo signal processing method provided by the embodiments of the present application.

In S12, acquire a superimposed histogram according to the single histograms.

In the embodiments of the present application, the superimposed histogram refers to a histogram obtained by superimposing at least two single histograms.

In specific applications, the calculation zero moments of the single histograms are aligned, and the at least two single histograms are superimposed according to reception time to form the aforementioned superimposed histogram.

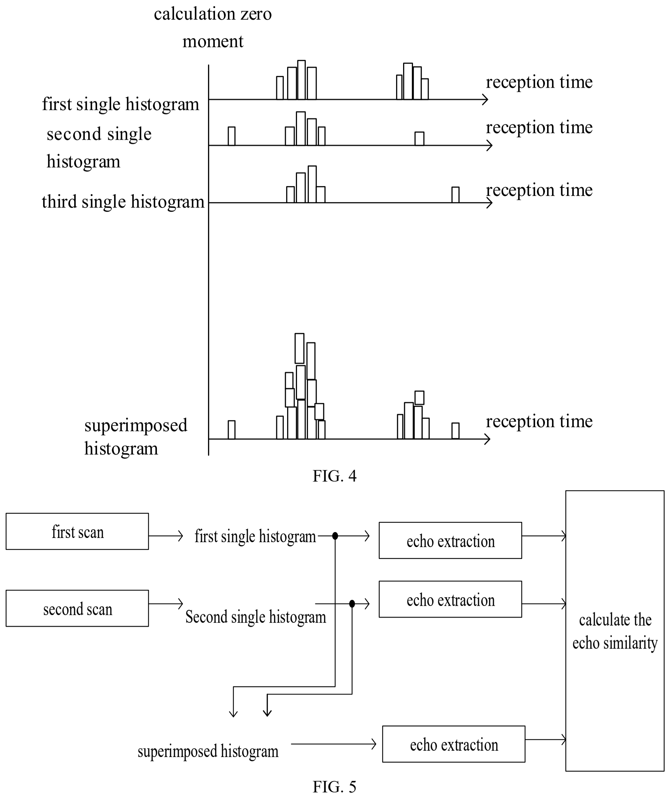

For example, FIG. 4 shows a schematic diagram of the process of obtaining a superimposed histogram by superimposing single histograms. As shown in FIG. 4, the calculation zero moment of the superimposed histogram is aligned with the calculation zero moments of the single histograms.

In specific applications, which single histograms are selected and how many single histograms are selected for superposition to obtain the superimposed histogram can be set according to actual application requirements.

Please refer to FIG. 5, which exemplarily shows a schematic diagram of a process of obtaining a superimposed histogram provided by an embodiment of the present application. In this example, within each scanning cycle, the radar system performs two scans, obtaining a first single histogram and a second single histogram. The superimposed histogram is obtained by superimposing the first single histogram and the second single histogram.

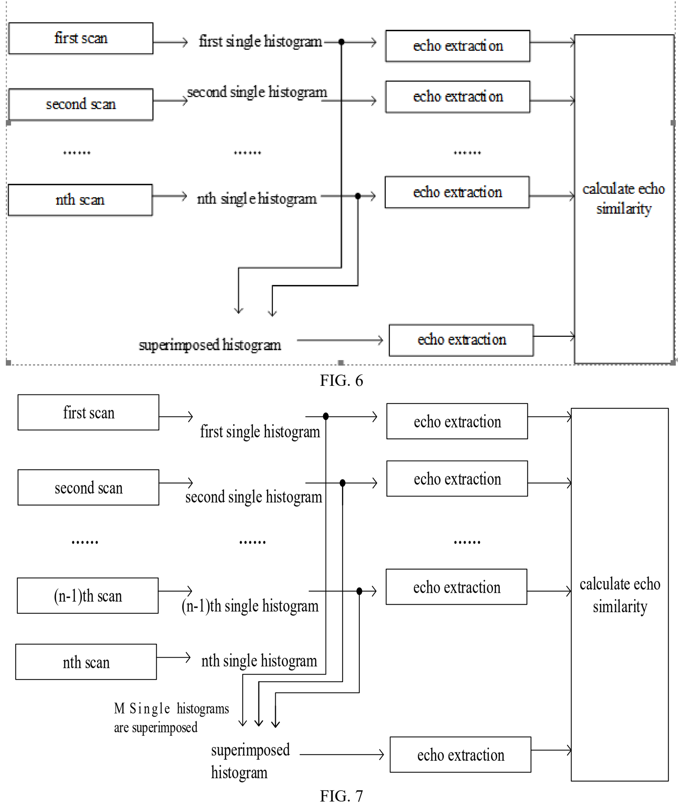

Please refer to FIG. 6, which exemplarily shows a schematic diagram of another process of obtaining a superimposed histogram provided by an embodiment of the present application. In this example, within each scanning cycle, the radar system performs n scans, thereby obtaining a first single histogram, a second single histogram, ..., an n-th single histogram. The data processing module can select any two of the n single histograms for superposition, for example, selecting the first single histogram and the n-th single histogram for superposition, to obtain the aforementioned superimposed histogram.

It can be understood that the data processing module may also select other two single histograms for superposition, for example, it may also select the first single histogram and the second single histogram for superposition, or select the n-th single histogram and the (n-1)-th single histogram for superposition. The embodiments of the present application do not impose a unique limitation on this.

In practical application processes, the n single histograms obtained by the radar system are input to the data processing module. The data processing module can then select corresponding two single histograms for superposition according to the requirements of the application scenario to obtain the superimposed histogram. For example, for objects moving slowly or stationary, the larger the time interval between the two selected single histograms (here, it may refer to the time interval between the scan start times), the more beneficial it is to distinguish crosstalk signals and noise information, and thus the more beneficial it is to improve the detection accuracy of the object. That is, for objects moving slowly or stationary, when selecting single histograms for superposition, single histograms with a larger time interval can be selected, such as the first single histogram and the n-th single histogram. For fast-moving objects, the smaller the time interval between the two selected single histograms, the more beneficial it is to improve the detection accuracy of the object. That is, when selecting single histograms for superposition, single histograms with a smaller time interval can be selected, such as the first single histogram and the second single histogram, or the second single histogram and the third single histogram, etc. In actual selection, appropriate single histograms can be selected according to the application scenario of the LiDAR. The present application does not impose a unique limitation on this.

It should be noted that n is a positive integer greater than 2. That is, in this example, the radar system performs at least 3 scans within one scanning cycle, then selects the single histograms obtained from two of these scans for superposition to obtain the superimposed histogram.

Please refer to FIG. 7, which exemplarily shows yet another schematic diagram of a process of obtaining a superimposed histogram provided by an embodiment of the present application. In this example, within each scanning cycle, the radar system performs n scans, thereby obtaining a first single histogram, a second single histogram, ..., an n-th single histogram. The data processing module can select any m of the n single histograms for superposition to obtain the aforementioned superimposed histogram.

Here, n is a positive integer greater than 2, m is a positive integer greater than or equal to 2, and m < n.

It should be noted that if m equals 2, it is the same as the previous example.

In the present application, an example where m is greater than 2 is used for explanation. That is, in this example, the radar system performs at least 3 scans within one scanning cycle, then selects single histograms obtained from m of these scans for superposition to obtain the superimposed histogram. For example, the radar system performs 4 scans within one scanning cycle, then can select the single histograms obtained from 3 of these scans for superposition to obtain the superimposed histogram.

In practical applications, when selecting which single histograms to superimpose, the selection can also be based on the application scenario of the LiDAR. The number of single histograms selected for superposition can also be determined according to the computational capability of the LiDAR. The embodiments of the present application do not impose specific restrictions on this. It can be understood that the more single histograms selected for superposition, the stronger the ability to identify crosstalk signals and noise signals, but the higher the requirement for the computational capability of the LiDAR. Therefore, based on the measurement accuracy and computational resources of the LiDAR, the number of single histograms for superposition can be determined.

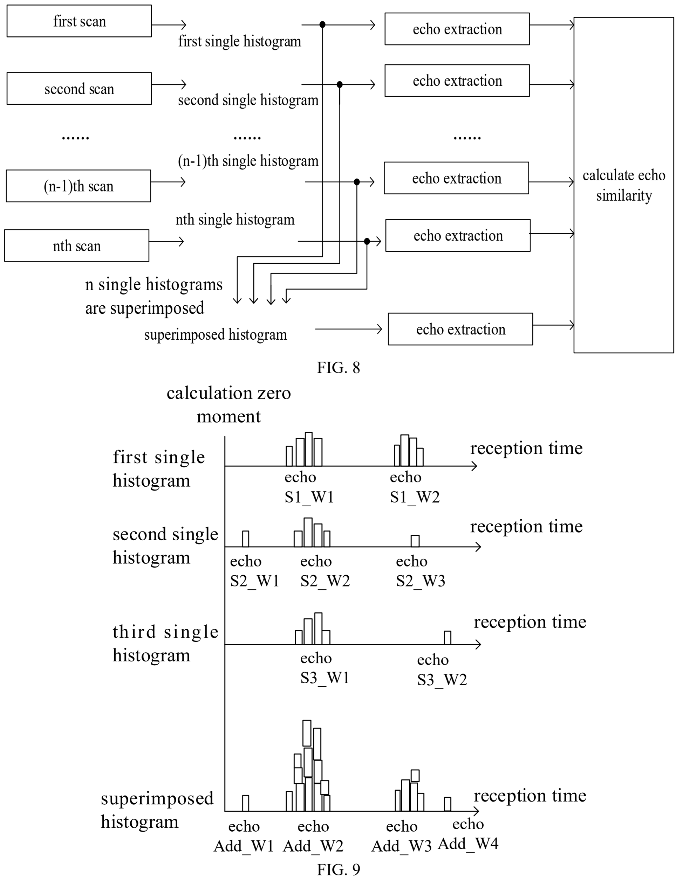

Please refer to FIG. 8, which exemplarily shows still another schematic diagram of a process of obtaining a superimposed histogram provided by an embodiment of the present application. In this example, within each scanning cycle, the radar system performs n scans, thereby obtaining a first single histogram, a second single histogram, ..., an n-th single histogram. The data processing module can select all n single histograms for superposition to obtain the aforementioned superimposed histogram. That is, in this example, the data selection module superimposes all n single histograms obtained from the n scans to obtain the superimposed histogram.

In this example, the superimposed histogram obtained by superimposing all n single histograms can more completely reflect the superposition situation of the histogram data obtained from each scan, thus providing more details for subsequent identification of crosstalk signals and noise signals, thereby improving the identification accuracy of the radar system for crosstalk signals and noise signals and enhancing the detection performance of the LiDAR.

In S13, respectively extract echo information of the superimposed histogram and echo information of target single histograms.

In specific applications, after obtaining the superimposed histogram, perform echo extraction on the superimposed histogram to identify all echoes in the superimposed histogram, and extract the echo information of the identified echoes.

Simultaneously, echo extraction can also be performed on the target single histograms to identify all echoes in the target single histograms, and extract the echo information of the identified echoes.

It should be noted that the target single histograms refer to the single histograms selected for calculating echo similarity. It can be understood that the number of target single histograms is greater than or equal to 2.

In specific applications, the selection of target single histograms can be set according to actual application requirements, and the number of target single histograms can also be set according to actual application requirements. The present application does not impose specific restrictions on this.

In specific applications, the echo information may include, but is not limited to: an echo amplitude and an echo timing moment. The aforementioned echo timing moment may be the peak moment of the echo, or the half-value moment of the echo, or the start moment of the echo, or the centroid moment of the echo. The present application does not impose a unique limitation on this.

It should be noted that the peak moment of an echo refers to the moment corresponding to the echo peak, the half-value moment of an echo refers to the moment corresponding to half of the echo peak value, and the echo start moment refers to the moment corresponding to the starting point of the echo.

It can be understood that there may be multiple echoes in the received echo signal (multiple echoes may be formed by reflections from multiple targets, or may be crosstalk signals or noise signals). Therefore, when performing echo extraction on a histogram (including the aforementioned superimposed histogram and the aforementioned target single histograms), multiple echoes may be extracted. For example, as shown in FIG. 9, in the superimposed histogram, a total of four echoes can be extracted, namely echo Add_W1, echo Add_W2, echo Add_W3, and echo Add_W4; two echoes can be extracted from the first single histogram, namely echo S1_W1 and echo S1_W2; three echoes can be extracted from the second single histogram, namely echo S2_W1, echo S2_W2, and echo S2_W3; two echoes can be extracted from the third single histogram, namely echo S3_W1 and echo S3_W2.

Since in the example shown in FIG. 9, the superimposed histogram is obtained by superimposing the aforementioned first single histogram, second single histogram, and third single histogram, in this example, the target single histograms may be selected as the first single histogram and the second single histogram, or as the first single histogram and the third single histogram, or as the second single histogram and the third single histogram, or as the aforementioned first single histogram, second single histogram, and third single histogram.

It should be noted that in the aforementioned S13, extracting echo information of the target single histograms refers to extracting echo information from each target single histogram respectively. Assuming the target single histograms include the first single histogram and the third single histogram, the data processing module can extract the echo information of echo S1_W1 and echo S1_W2 in the first single histogram, i.e., extract the echo amplitude Amp_11_hist and the echo timing moment Time_11_hist of echo S1_W1, and the echo amplitude Amp_12_hist and the echo timing moment Time_12_hist of echo S1_W2; simultaneously, the data processing module can also extract the echo information of echo S3_W1 and echo S3_W2 in the third single histogram, i.e., extract the echo amplitude Amp_31_hist and the echo timing moment Time_31_hist of echo S3_W1, and the echo amplitude Amp_32_hist and the echo timing moment Time_32_hist of echo S3_W2.

Similarly, extracting the echo information of the superimposed histogram also involves extracting the echo information of all echoes in the superimposed histogram, i.e., extracting the echo information of echo Add_W1, echo Add_W2, echo Add_W3, and echo Add_W4. Specifically, the echo amplitude Amp_add1_hist and the echo timing moment Time_add1_hist of echo Add_W1 can be extracted; the echo amplitude Amp_add2_hist and the echo timing moment Time_add2_hist of echo Add_W2 can be extracted; the echo amplitude Amp_add3_hist and the echo timing moment Time_add3_hist of echo Add_W3 can be extracted; and the echo amplitude Amp_add4_hist and the echo timing moment Time_add4_hist of echo Add_W4 can be extracted.

In an embodiment of the present application, to reduce computational resources, the single histograms may be sampled before extracting their echo information.

In specific applications, the aforementioned sampling of a single histogram specifically refers to extracting a portion of data samples from the single histogram to characterize it, thereby reducing the amount of data in the single histogram. For example, assuming the original sampling rate of a single histogram is 1 Gsps, i.e., obtaining one sample point data every 1 ns, with a sampling duration of 1 us, 1000 data points would be obtained; sampling the single histogram involves extracting data from these 1000 data points, using the extracted data for echo extraction, rather than analyzing all 1000 data points. For example, extracting one data point every 4 data points for calculation, i.e., obtaining 200 data points after sampling. Then, the data processing module only needs to calculate the extracted 200 data points, thus effectively reducing the computational resources required for processing.

In S14, calculate an echo similarity of each echo in the superimposed histogram, and an echo similarity of corresponding echoes between the target single histograms, according to the echo information of the superimposed histogram and the echo information of the target single histograms.

In the embodiments of the present application, for all echoes existing in the superimposed histogram, the echo similarity is calculated for each echo according to its echo information and the echo information in the target single histograms. This specifically may include temporal similarity judgment and amplitude similarity judgment. Specifically, the aforementioned S14 may include the following steps:

Determine a temporal similarity of the echo according to the echo timing moment of each echo in the superimposed histogram and the echo timing moment of the corresponding echo in the target single histograms;

Determine an amplitude similarity of the echo according to the echo amplitude of each echo in the superimposed histogram and the echo amplitude of the corresponding echo in the target single histograms.

In specific applications, the echo similarity of each echo can be determined by the following formulas:

Condition 1 (used to determine the temporal similarity of the echo):
$$|\text{Time\_i\_hist} - \text{Time\_add\_hist}| < \text{Time\_Th\_difference\_Hist\_Ax};$$

Here, Time_i_hist refers to the echo timing moment of an echo in the i-th target single histogram, Time_add_hist refers to the echo timing moment of the corresponding echo in the superimposed histogram, and Time_Th_difference_Hist_Ax refers to the first preset time threshold. Condition 1 can be characterized as the absolute value of the difference between the echo timing moment of the echo in the i-th target single histogram and the echo timing moment of the corresponding echo in the superimposed histogram being less than the first preset time threshold.

Condition 2 (used to determine the amplitude similarity of the echo):
$$|\text{Amp\_i\_hist} * \text{gain\_hist\_sim\_Ax} - \text{Amp\_add\_hist}| < \text{Amp\_Th\_difference\_Hist\_Ax};$$

Here, Amp_i_hist refers to the echo amplitude of the echo in the i-th target single histogram, gain_hist_sim_Ax refers to the preset amplitude gain coefficient, Amp_add_hist refers to the echo amplitude of the corresponding echo in the superimposed histogram, and Amp_Th_difference_Hist_Ax is the first preset amplitude threshold.

Condition 2 can be characterized as the absolute value of the difference between the product of the echo amplitude of the echo in the i-th target single histogram multiplied by the preset amplitude gain coefficient and the echo amplitude of the corresponding echo in the superimposed histogram being less than the first preset amplitude threshold.

It should be noted that considering that the emission power corresponding to different scan counts may be inconsistent, the preset amplitude gain coefficient corresponding to different single histograms may be different. The preset amplitude gain coefficient for each single histogram can be set according to actual application requirements. The present application does not impose specific restrictions on this.

Condition 3 (for echo amplitude restriction): $\text{Amp\_i\_hist} \mathrel{!=} 0.$

Condition 3 can be characterized as the echo amplitude of the echo in the i-th target single histogram not being 0.

If all three conditions are satisfied, the similarity of the echo is 1; otherwise, the echo similarity is 0.

It should be noted that the aforementioned preset time threshold, preset amplitude gain coefficient, and preset amplitude threshold can be set according to actual application requirements. The present application does not impose specific restrictions on this. As an example, the preset time threshold and the preset amplitude threshold may be obtained through calibration based on distance or echo strength, or through theoretical calculation.

Combining the example shown in FIG. 9, taking the first single histogram and the third single histogram in FIG. 9 as the target single histograms, for echo Add_W1 in the superimposed histogram, first calculate the echo similarity Sim_A11 between echo Add_W1 in the superimposed histogram and the first single histogram. Since there is no corresponding echo in the first single histogram, Amp_i_hist is determined to be 0, so the echo similarity Sim_A11 between echo Add_W1 in the superimposed histogram and the corresponding echo in the first single histogram is 0; then calculate the echo similarity Sim_A13 between echo Add_W1 in the superimposed histogram and the third single histogram. Since there is also no echo corresponding to echo Add_W1 in the third single histogram, Amp_i_hist can be determined to be 0. Therefore, the echo similarity Sim_A13 between echo Add_W1 in the superimposed histogram and the corresponding echo in the third single histogram is 0.

For echo Add_W2 in the superimposed histogram, it can be determined that the echo corresponding to echo Add_W2 in the first single histogram is echo S1_W1. Therefore, Time_i_hist in Condition 1 can be determined as the echo timing moment Time_11_hist of echo S1_W1, and Amp_i_hist in Conditions 2 and 3 can be determined as the echo amplitude Amp_11_hist of echo S1_W1. Assuming the calculation result satisfies the above three conditions, then the echo similarity Sim_A21 between echo Add_W2 in the superimposed histogram and echo S1_W1 in the first single histogram can be determined as 1; similarly, it can be determined that the echo corresponding to echo Add_W2 in the third single histogram is echo S3_W1. Therefore, Time_i_hist in Condition 1 can be determined as the echo timing moment Time_31_hist of echo S3_W1, and Amp_i_hist in Conditions 2 and 3 can be determined as the echo amplitude Amp_31_hist of echo S3_W1. Assuming the calculation result satisfies the above three conditions, then the echo similarity Sim_A23 between echo Add_W2 in the superimposed histogram and echo S3_W1 in the third single histogram can be determined as 1. The echo similarity of echo Add_W3 and echo Add_W4 in the superimposed histogram are calculated in the same manner.

In other embodiments, the echo similarity of each echo in the superimposed histogram can also be determined by the following formulas:

Condition 1`:
Start_Time_add_hist <= Time_i_hist <= End_Time_add_hist;

Here, Start_Time_add_hist refers to the echo start moment of an echo in the superimposed histogram, and End_Time_add_hist refers to the echo end moment of the echo in the superimposed histogram. Condition 1' can be understood as the echo timing moment of the corresponding echo in the target single histogram falling between the echo start moment and the echo end moment of the corresponding echo in the superimposed histogram.

That is, in this embodiment, the echo information in the aforementioned superimposed echo histogram may also include an echo start moment and an echo end moment.

Condition 1' can be characterized as the echo timing moment of the echo in the i-th single histogram falling within the range between the echo start moment and the echo end moment of the corresponding echo in the superimposed histogram.

Condition 2:
|Amp_i_hist * gain_hist_sim_Ax - Amp_add_hist| < Amp_Th_difference_Hist_Ax;

Condition 3: Amp_i_hist != 0.

It should be noted that when calculating the echo similarity of each echo in the superimposed histogram, the data processing module can determine whether to use Condition 1 or Condition 1for temporal similarity judgment based on the extracted echo information. For example, for cases where only the echo timing moment can be obtained, use Condition 1 for temporal similarity judgment; for cases where both the echo start moment and echo end moment can be obtained, use Condition 1for temporal similarity judgment.

It can be understood that the above description uses the case where the target single histograms include single histograms obtained from two scans as an example. In cases where the target single histograms include single histograms obtained from more than two scans, the echo similarity calculation for each echo in the superimposed histogram needs to be performed with all the aforementioned target single histograms. For example, still using the example shown in FIG. 9, assuming the target single histograms selected by the data processing module include the first single histogram, the second single histogram, and the third single histogram, then when calculating the echo similarity of each echo in the superimposed histogram, it is necessary to calculate the echo similarity between each echo in the superimposed histogram and the first single histogram, calculate the echo similarity between each echo in the superimposed histogram and the second single histogram, and calculate the echo similarity between each echo in the superimposed histogram and the third single echo histogram.

After calculating the echo similarity of each echo in the superimposed histogram, the echo similarity between the target single histograms can also be calculated.

Specifically, the aforementioned calculation of the echo similarity between target single histograms can be achieved through the following formulas:

Condition 4: |Time_i_hist - Time_j_hist| < Time_Th_difference_i_j_Ax;

Here, Time_i_hist is the echo timing moment of an echo in the i-th target single histogram, Time_j_hist is the echo timing moment of the corresponding echo in the j-th target single histogram, and Time_Th_difference_i_j_Ax is the second preset time threshold.

Condition 4 can be characterized as the absolute value of the difference between the echo timing moment of the echo in the i-th target single histogram and the echo timing moment of the corresponding echo in the j-th target single histogram being less than the second preset time threshold.

Condition 5: |Amp_i_hist * gain_hist_sim_i_j_Ax - Amp_j_hist| < Amp_Th_difference_i_j_Ax;                Condition (M

Here, Amp_i_hist is the echo amplitude of the echo in the i-th target single histogram, gain_hist_sim_1_j_Ax is the amplitude gain coefficient between the i-th scan and the j-th scan, Amp_j_hist is the echo amplitude of the echo in the j-th target single histogram, and Amp_Th_difference_i_j_Ax is the second preset amplitude threshold.

Condition 5 can be characterized as the absolute value of the difference between the product of the echo amplitude of the i-th target single histogram and the amplitude gain coefficient and the echo amplitude of the echo in the j-th target single histogram being less than the second preset amplitude threshold.

## Condition 6: Amp_i_hist != 0; Amp_j_hist != 0.

If all three conditions are satisfied, then the echo similarity between the corresponding echoes of the two target histograms is 1; otherwise, the echo similarity is 0.

Condition 6 can be characterized as the echo amplitude of the echo in the i-th target single histogram not being 0, and the echo amplitude of the echo in the j-th target single histogram not being 0.

Here, i and j are both positive integers, and i ≠ j.

For example, assuming the target single histograms are the first single histogram and the third single histogram in FIG. 9, then calculate the echo similarity between echo S1_W1 in the first single histogram and echo S3_W1 in the third single histogram, calculate the echo similarity between echo S1_W2 in the first single histogram and echo S3_W2 in the third single histogram, and calculate the echo similarity between echo S3_W2 in the third single histogram and the corresponding echo in the first single histogram (if any).

It can be understood that the above example only uses the case where the number of target single histograms is 2 for explanation. For cases where the number of target single histograms is greater than 2, it is necessary to calculate the echo similarity between multiple target single histograms pairwise. For example, still using the example shown in FIG. 9, assuming the target single histograms selected by the data processing module include the first single histogram, the second single histogram, and the third single histogram, then when calculating the echo similarity between the target single histograms, it is necessary to calculate the echo similarity between echoes in the first single histogram and the second single histogram, also calculate the echo similarity between echoes in the first single histogram and the third single histogram, and simultaneously, also calculate the echo similarity between echoes in the second single histogram and the third single histogram, the echo similarity between echoes in the second single histogram and the first single histogram, the similarity between echoes in the third single histogram and the first single histogram, and the echo similarity between echoes in the third single histogram and the second single histogram.

In S15, determine the echo confidence level of each echo in the superimposed histogram according to the echo similarity of the echoes in the superimposed histogram and the echo similarity between the target single histograms.

In the embodiments of the present application, different confidence level grades can be set according to the number of target single histograms selected by the radar system. Different confidence level grades can correspond to different echo confidence levels.

For example, taking the case where two target single histograms are selected as an example, 4 confidence level grades can be set. The classification criteria for each confidence level grade can be as follows:

Confidence level grade 3: The echo similarity of the echo in the superimposed histogram is 1 for all target histograms, and the echo similarity between the target single histograms is 1, and the echo amplitude is not 0.

Confidence level grade 2: The echo similarity between the echo in the superimposed histogram and the first target single histogram is 1 or the echo similarity between the echo in the superimposed histogram and the second target single histogram is 1, the echo similarity between the first target single histogram and the second target single histogram is 1, and the echo amplitude is not 0.

Confidence level grade 1: The echo similarity between the echo in the superimposed histogram and the first target single histogram is 1 or the echo similarity between the echo in the superimposed histogram and the second target single histogram is 1, and the echo similarity between the first target single histogram and the second target single histogram is 0.

Confidence level grade 0: The echo similarity between the echo in the superimposed histogram and the first target single histogram and the echo similarity between the echo in the superimposed histogram and the second target single histogram are both 0.

In an embodiment of the present application, the aforementioned S15 may include the following steps:

Determine a confidence level grade of the echo according to the echo similarity of the echoes in the superimposed histogram and the echo similarity between the target single histograms;
Determine the echo confidence level of the echo according to the confidence level grade of the echo.

It can be understood that the confidence level grade and the corresponding echo confidence level can be set according to application requirements. For example, in some embodiments of the present application, a higher confidence level grade corresponds to a greater echo confidence level, and a greater echo confidence level means a higher probability that the echo is a valid echo, and vice versa. In other embodiments of the present application, it can also be set that a lower confidence level grade corresponds to a greater echo confidence level, and a greater echo confidence level means a lower probability that the echo is a valid echo, and vice versa.

It can also be understood that the greater the number of target single histograms, the more confidence level grades can be set, and the classification criteria corresponding to each confidence level grade can be set according to the similarity judgment requirements. The above are only examples of classification criteria for confidence level grades and not limitations.

In S16, identify a valid echo according to the echo confidence level of the echo.

In specific applications, after determining the echo confidence level of each echo, echoes with an echo confidence level greater than a preset confidence threshold can be identified as valid echoes.

The preset confidence threshold can be set according to application scenarios or historical experience. The present application does not impose specific restrictions on this.

In some embodiments, after determining the echo confidence level of each echo, the echoes can be sorted according to their echo confidence levels, and the top k echoes with the highest confidence levels are determined as valid echoes. Here, the count threshold k can be selected according to the application scenario. The present application does not impose restrictions on this.

In some embodiments, after determining the echo confidence level of each echo, echoes with an echo confidence level greater than the preset confidence threshold can be filtered out, and it is determined whether the number of echoes is greater than k. If it is greater than k, the filtered echoes are sorted according to the magnitude of their echo confidence levels, and the top k echoes with the highest echo confidence levels are determined as valid echoes; if the number of echoes is less than k, all filtered echoes can be determined as valid echoes.

In an embodiment of the present application, the output result of the data processing module can be echo data from which non-valid echoes have been filtered out, or only the echo confidence level values may be output so that subsequent modules, such as a target identification module, can distinguish valid echoes from non-valid echoes based on the echo confidence level. Here, non-valid echoes may be crosstalk echoes or noise echoes.

In an embodiment of the present application, the aforementioned echo processing method may further include: filtering out echo data of non-valid echoes to obtain effective echo data, and using the effective echo data for target identification.

In specific applications, after the radar system filters out the identified crosstalk echoes and noise signals in each scanning channel, it can perform target identification based on the valid echoes to meet the target detection requirements in the environment.

As can be seen from the above, the echo signal processing method provided by the embodiments of the present application adopts a method of calculating the echo similarity between single histograms and the echo similarity between a single histogram and a superimposed histogram to quantify the confidence level of an echo being a crosstalk echo or a noise signal. This can improve the identification accuracy of the radar system for noise signals and crosstalk echoes, enhance the ability of the radar system to resist interference from crosstalk echoes and noise signals, and improve the detection performance of the radar system.

In an embodiment of the present application, the output of the data processing module may be echo data with non-valid echoes filtered out, or may only output the echo confidence value, so that a subsequent module, such as a target recognition module, can distinguish valid echoes from non-valid echoes based on the echo confidence. Here, non-valid echoes may be crosstalk echoes or noise echoes.

In an embodiment of the present application, the aforementioned echo processing method may further include: filtering out echo data of non-valid echoes to obtain valid echo data, and performing target recognition using the valid echo data.

In specific applications, after filtering out crosstalk echoes and noise signals identified in each scanning channel, the radar system can perform target recognition based on the valid echoes, thereby meeting the requirements for target detection in the environment.

As can be seen from the above, the echo signal processing method provided by the embodiments of the present application employs a method of calculating the echo similarity between single histograms and the echo similarity between single histograms and a superimposed histogram to quantify the confidence that an echo is a crosstalk echo or a noise signal. This can improve the recognition accuracy of the radar system for noise signals and crosstalk echoes, enhance the radar system's ability to resist interference from crosstalk echoes and noise signals, and improve the detection performance of the radar system.

It should be understood that the size of the sequence numbers of the steps in the above embodiments does not imply the order of execution. The execution order of each process should be determined by its function and internal logic, and should not constitute any limitation on the implementation process of the embodiments of the present application.

Based on the echo signal processing method provided in the above embodiments, embodiments of the present invention further provide embodiments of an echo data processing apparatus for implementing the aforementioned method embodiments.

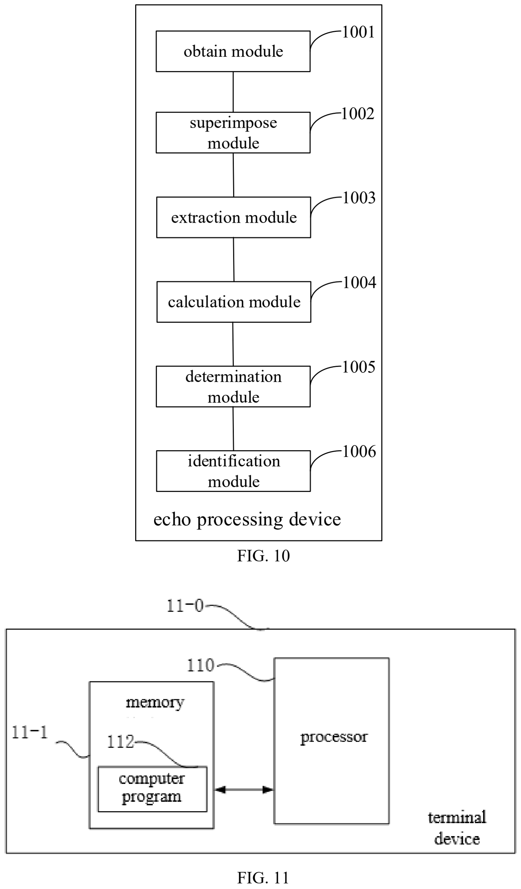

Please refer to FIG. 10, which is a schematic structural diagram o in the embodiment corresponding to FIG. 3. For details, please refer to the related descriptions in FIG. 3 and the corresponding embodiment. For ease of description, only parts related to this embodiment are shown. As shown in FIG. 10, the aforementioned echo data processing apparatus may include an acquisition module 1001, a superimposition module 1002, an extraction module 1003, a calculation module 1004, a determination module 1005, and an identification module 1006.

The acquisition module 1001 is configured to acquire a plurality of single histograms obtained from at least two scans, where the single histogram is a histogram formed by echo signals obtained from at least two scans of a same scanning channel.

The superimposition module 1002 is configured to acquire a superimposed histogram based on the single histograms.

The extraction module 1003 is configured to extract echo information of the superimposed histogram and echo information of target single histograms respectively.

The calculation module 1004 is configured to calculate, based on the echo information of the superimposed histogram and the echo information of the target single histograms, an echo similarity of each echo in the superimposed histogram, and an echo similarity between corresponding echoes in the target single histograms.

The determination module 1005 is configured to determine an echo confidence of each echo in the superimposed histogram based on the echo similarity of the echoes in the superimposed histogram and the echo similarity between the target single histograms.

The identification module 1006 is configured to identify a valid echo based on the echo confidence of the echo.

In some implementations, the echo information includes an echo amplitude and an echo timing moment. The calculation module 1004 is specifically configured to determine a time similarity of the echo based on the echo timing moment of each echo in the superimposed histogram and the echo timing moment of a corresponding echo in the target single histogram; and determine an amplitude similarity of the echo based on the echo amplitude of each echo in the superimposed histogram and the echo amplitude of the corresponding echo in the target single histogram.

In some implementations, the calculation module 1004 is specifically configured to: if an absolute value of a difference between an echo timing moment of an echo in an i-th target single histogram and an echo timing moment of a corresponding echo in the superimposed histogram is less than a first preset time threshold, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not zero, then the similarity of the echo is 1, where i is a positive integer.

In some implementations, the echo information includes: an echo start moment and an echo end moment. The calculation module 1004 is specifically configured to: if an echo timing moment of an echo in an i-th single histogram is within a range defined by an echo start moment and an echo end moment of a corresponding echo in the superimposed histogram, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not zero, then the similarity of the echo is 1, where i is a positive integer.

In some implementations, the calculation module 1004 is specifically configured to: if an absolute value of a difference between an echo timing moment of an echo in an i-th target single histogram and an echo timing moment of a corresponding echo in a j-th target single histogram is less than a second preset time threshold, an absolute value of a difference between a product of an echo amplitude of the i-th target single histogram and an amplitude gain coefficient and an echo amplitude of the corresponding echo in the j-th target single histogram is less than a second preset amplitude threshold, and the echo amplitude of the echo in the i-th target single histogram is not zero, and the echo amplitude of the echo in the j-th target single histogram is not zero, then determine that the echo similarity between the echo in the i-th target single histogram and the corresponding echo in the j-th target single histogram is 1, where i and j are both positive integers, and i≠j.

In some implementations, the determination module 1005 is specifically configured to: determine a confidence level of the echo based on the echo similarity of the echoes in the superimposed histogram and the echo similarity between the target single histograms; and determine the echo confidence of the echo based on the confidence level of the echo.

In some embodiments, the identification module 1006 is specifically configured to: determine the number of echoes whose echo confidence is greater than a preset confidence threshold; and if the number of echoes whose echo confidence is greater than the preset confidence threshold is greater than a number threshold, determine the top k echoes with higher echo confidence as valid echoes, where k is a positive integer.

It should be noted that the information interaction and execution processes between the above-mentioned units, as they are based on the same concept as the method embodiments of the present application, their specific functions and the technical effects brought about can be referred to the method embodiments section, and details are not repeated here.

Therefore, the echo data processing apparatus provided by the embodiments of the present application can also employ the method of calculating the echo similarity between single histograms and the echo similarity between single histograms and a superimposed histogram to quantify the confidence that an echo is a crosstalk echo or a noise signal. This can improve the recognition accuracy of the radar system for noise signals and crosstalk echoes, enhance the radar system's ability to resist interference from crosstalk echoes and noise signals, and improve the detection performance of the radar system.

FIG. 11 is a schematic structural diagram of a terminal device provided by an embodiment of the present application. As shown in FIG. 11, the terminal device 11-0 provided in this embodiment includes: a processor 110, a memory 11-1, and a computer program 112 stored in the memory 11-1 and executable on the processor 110, such as an echo signal processing program. When the processor 110 executes the computer program 112, the steps in the various echo signal processing method embodiments described above are implemented, such as S11 to S16 shown in FIG. 3. Alternatively, when the processor 110 executes the computer program 112, the functions of each module/unit in the various terminal device embodiments described above are implemented, such as the functions of units 1001 to 1006 shown in FIG. 10.

By way of example, the computer program 112 may be divided into one or more modules/units. The one or more modules/units are stored in the memory 11-1 and executed by the processor 110 to complete the present application. The one or more modules/units may be a series of computer program instruction segments capable of performing specific functions. These instruction segments are used to describe the execution process of the computer program 112 in the terminal device 11-0. For example, the computer program 112 may be divided into an acquisition unit, a determination unit, and a calculation unit. The specific functions of each unit are described in the related descriptions of the corresponding embodiments in FIG. 11, and details are not repeated here.

The terminal device may include, but is not limited to, the processor 110 and the memory 11-1. Those skilled in the art can understand that FIG. 11 is only an example of the terminal device 11-0 and does not constitute a limitation on the terminal device 11-0. The terminal device may include more or fewer components than those shown in the figure, or a combination of some components, or different components. For example, the terminal device may further include input/output devices, network access devices, buses, etc.

The processor 110 may be a Central Processing Unit (CPU), or may be another general-purpose processor, a Digital Signal Processor (DSP), an Application Specific Integrated Circuit (ASIC), a Field-Programmable Gate Array (FPGA), or other programmable logic devices, discrete gate or transistor logic devices, discrete hardware components, etc. The general-purpose processor may be a microprocessor, or the processor may be any conventional processor, etc.

The memory 11-1 may be an internal storage unit of the terminal device 11-0, such as a hard disk or memory of the terminal device 11-0. The memory 11-1 may also be an external storage device of the terminal device 11-0, such as a plug-in hard disk, a Smart Media Card (SMC), a Secure Digital (SD) card, or a Flash Card, etc., equipped on the terminal device 11-0. Furthermore, the memory 11-1 may include both the internal storage unit of the terminal device 8 and an external storage device. The memory 11-1 is used to store the computer program and other programs and data required by the terminal device. The memory 11-1 may also be used to temporarily store data that has been output or is to be output.

Embodiments of the present application further provide a computer-readable storage medium. A computer program is stored in the computer-readable storage medium. When the computer program is executed by a processor, the echo signal processing method described above may be implemented.

Embodiments of the present application provide a computer program product. When the computer program product runs on a terminal device, the terminal device is caused to execute the echo signal processing method described above.

Those skilled in the art can clearly understand that, for the convenience and brevity of description, the division of the above-mentioned functional units and modules is merely exemplary. In practical applications, the above functions may be allocated to different functional units or modules as needed. That is, the internal structure of the terminal device may be divided into different functional units or modules to perform all or part of the functions described above. The functional units or modules in the embodiments may be integrated into one processing unit, or each unit may exist alone physically, or two or more units may be integrated into one unit. The integrated unit may be implemented in the form of hardware or software functional units. In addition, the specific names of the functional units and modules are only for the convenience of distinguishing them from each other and are not intended to limit the protection scope of the present application. The specific working processes of the units and modules in the above system may be referred to the corresponding processes in the foregoing method embodiments and are not repeated here.

In the above embodiments, the descriptions of the various embodiments have their own emphases. For parts not described in detail or recorded in a certain embodiment, reference may be made to the relevant descriptions of other embodiments.

Those of ordinary skill in the art may appreciate that the units and algorithm steps of the examples described in the embodiments disclosed herein can be implemented by electronic hardware, or a combination of computer software and electronic hardware. Whether these functions are performed by hardware or software depends on the specific application and design constraints of the technical solution. Professionals can use different methods for each specific application to implement the described functions, but such implementation should not be considered beyond the scope of the present application.

**Claims**

1. An echo signal processing method, comprising:

acquiring single histograms obtained from at least two scans, wherein the single histogram is a histogram formed from echo signals obtained by performing at least two scans on a same scanning channel;
acquiring a superimposed histogram according to the single histograms;
respectively extracting echo information of the superimposed histogram and echo information of target single histograms;
calculating an echo similarity of each echo in the superimposed histogram, and an echo similarity of corresponding echoes between the target single histograms, according to the echo information of the superimposed histogram and the echo information of the target single histograms;
determining an echo confidence level of each echo in the superimposed histogram according to the echo similarity of the echoes in the superimposed histogram and the echo similarity between the target single histograms; and
identifying a valid echo according to the echo confidence level of the echo.

2. The echo signal processing method according to claim 1, wherein:

the echo information comprises an echo amplitude and an echo timing moment; and
the calculating the echo similarity of each echo in the superimposed histogram according to the echo information of the superimposed histogram and the echo information of the target single histograms comprises:

determining a temporal similarity of the echo according to the echo timing moment of each echo in the superimposed histogram and the echo timing moment of a corresponding echo in the target single histograms; and
determining an amplitude similarity of the echo according to the echo amplitude of each echo in the superimposed histogram and the echo amplitude of the corresponding echo in the target single histograms.

3. The echo signal processing method according to claim 2, wherein the calculating the echo similarity of each echo in the superimposed histogram according to the echo information of the superimposed histogram and the echo information of the target single histograms comprises:
if an absolute value of a difference between an echo timing moment of an echo in an i-th target single histogram and an echo timing moment of a corresponding echo in the superimposed histogram is less than a first preset time threshold, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not 0, determining the similarity of the echo as 1, wherein i is a positive integer.

4. The echo signal processing method according to claim 1, wherein:

the echo information comprises an echo start moment and an echo end moment; and
the calculating the echo similarity of each echo in the superimposed histogram according to the echo information of the superimposed histogram and the echo information of the target single histograms comprises:
if an echo timing moment of an echo in an i-th single histogram falls within a range between an echo start moment and an echo end moment of a corresponding echo in the superimposed histogram, an absolute value of a difference between a product of an echo amplitude of the echo in the i-th target single histogram and a preset amplitude gain coefficient and an echo amplitude of the corresponding echo in the superimposed histogram is less than a first preset amplitude threshold, and the echo amplitude of the echo in the i-th target single histogram is not 0, determining the similarity of the echo as 1, wherein i is a positive integer.

5. The echo signal processing method according to any one of claims 1 to 4, wherein the calculating the echo similarity of corresponding echoes between the target single histograms comprises:
if an absolute value of a difference between an echo timing moment of an echo in an i-th target single histogram and an echo timing moment of a corresponding echo in a j-th target single histogram is less than a second preset time threshold, an absolute value of a difference between a product of an echo amplitude of the i-th target single histogram and an amplitude gain coefficient and an echo amplitude of the corresponding echo in the j-th target single histogram is less than a second preset amplitude threshold, and the echo amplitude of the echo in the i-th target single histogram is not 0, and the echo amplitude of the echo in the j-th target single histogram is not 0, then determining an echo similarity between the echo in the i-th target single histogram and the corresponding echo in the j-th target single histogram as 1, wherein i and j are positive integers, and i ≠ j.

6. The echo signal processing method according to any one of claims 1 to 5, wherein the determining the echo confidence level of each echo in the superimposed histogram according to the echo similarity of the echoes in the superimposed histogram and the echo similarity between the target single histograms comprises:

determining a confidence level grade of the echo according to the echo similarity of the echoes in the superimposed histogram and the echo similarity between the target single histograms; and
determining the echo confidence level of the echo according to the confidence level grade of the echo.

7. The echo signal processing method according to any one of claims 1 to 6, wherein the identifying a valid echo according to the echo confidence level of the echo comprises:

determining a number of echoes whose echo confidence level is greater than a preset confidence threshold; and
if the number of echoes whose echo confidence level is greater than the preset confidence threshold is greater than a count threshold, determining top k echoes with higher echo confidence levels as valid echoes, wherein k is a positive integer.

8. An echo data processing apparatus, comprising:

an acquisition module, configured to acquire single histograms obtained from at least two scans, wherein the single histogram is a histogram formed from echo signals obtained by performing at least two scans on the same scanning channel;
a superimposition module, configured to acquire a superimposed histogram according to the single histograms;
an extraction module, configured to respectively extract echo information of the superimposed histogram and echo information of target single histograms;
a calculation module, configured to calculate an echo similarity of each echo in the superimposed histogram, and an echo similarity of corresponding echoes between the target single histograms, according to the echo information of the superimposed histogram and the echo information of the target single histograms;
a determination module, configured to determine an echo confidence level of each echo in the superimposed histogram according to the echo similarity of the echoes in the superimposed histogram and the echo similarity between the target single histograms; and
an identification module, configured to identify a valid echo according to the echo confidence level of the echo.

9. A terminal device, comprising a memory, a processor, and a computer program stored in the memory and executable on the processor, wherein when the processor executes readable instructions of the computer program, the echo signal processing method according to any one of claims 1 to 7 is implemented.

10. A computer program product, wherein when the computer program product runs on a terminal device, the terminal device is caused to implement the echo signal processing method according to any one of claims 1 to 7 when executed.

FIG. 1

LiDAR system 100

FIG. 2

```
                                                    ┌─ S11
┌─────────────────────────────────────────────────────┐
│     acquire single histograms obtained from at least two scans    │
└─────────────────────────────────────────────────────┘
                                                    ┌─ S12
┌─────────────────────────────────────────────────────┐
│   acquire a superimposed histogram according to the single histograms   │
└─────────────────────────────────────────────────────┘
                                                    ┌─ S13
┌─────────────────────────────────────────────────────┐
│  respectively extract echo information of the superimposed histogram and echo   │
│              information of target single histograms                │
└─────────────────────────────────────────────────────┘
                                                    ┌─ S14
┌─────────────────────────────────────────────────────┐
│  calculate an echo similarity of each echo in the superimposed histogram, and   │
│    an echo similarity of corresponding echoes between the target single         │
│  histograms, according to the echo information of the superimposed histogram    │
│       and the echo information of the target single histograms                  │
└─────────────────────────────────────────────────────┘
                                                    ┌─ S15
┌─────────────────────────────────────────────────────┐
│  determine the echo confidence level of each echo in the superimposed           │
│  histogram according to the echo similarity of the echoes in the superimposed   │
│   histogram and the echo similarity between the target single histograms        │
└─────────────────────────────────────────────────────┘
                                                    ┌─ S16
┌─────────────────────────────────────────────────────┐
│     identify a valid echo according to the echo confidence level of the echo    │
└─────────────────────────────────────────────────────┘
```

FIG. 3

calculation zero
moment

first single histogram ────────────────────────────► reception time

second single
histogram ──────────────────────────► reception time

third single histogram ──────────────────────────► reception time

superimposed
histogram ──────────────────────────► reception time

FIG. 4

| first scan | → first single histogram ──●──→ | echo extraction | → |
| second scan | → Second single histogram ──●──→ | echo extraction | → | calculate the echo similarity |
| | superimposed histogram ────→ | echo extraction | → |

FIG. 5

FIG. 6

FIG. 7

first scan → first single histogram → echo extraction → calculate echo similarity

second scan → second single histogram → echo extraction

...... ...... ......

(n-1)th scan → (n-1)th single histogram → echo extraction

nth scan → nth single histogram → echo extraction

n single histograms
are superimposed

superimposed histogram → echo extraction

FIG. 8

calculation zero
moment

first single
histogram

reception time

echo
S1_W1

echo
S1_W2

second single
histogram

reception time

echo
S2_W1

echo
S2_W2

echo
S2_W3

third single
histogram

reception time

echo
S3_W1

echo
S3_W2

superimposed
histogram

reception time

echo
Add_W1

echo
Add_W2

echo
Add_W3

echo
Add_W4

FIG. 9

FIG. 10

FIG. 11

<table>
<tr><td></td><td></td><td>**EUROPEAN SEARCH REPORT**</td><td>**Application Number**<br>EP 26 15 2647</td></tr>
</table>

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | US 2021/124027 A1 (HOLZHÜTER HANNO [DE] ET AL) 29 April 2021 (2021-04-29)<br>* paragraphs [0070], [0073] - [0075]; figures 3(a) - 5(c) *<br>----- | 1-10 | INV.<br>G01S7/487<br>G01S7/4865<br>G01S17/10 |
| A | US 2021/350165 A1 (ZHU HONGWEI [US] ET AL) 11 November 2021 (2021-11-11)<br>* paragraph [0057] *<br>----- | 1-10 | ADD.<br>G01S17/931 |

TECHNICAL FIELDS
SEARCHED (IPC)

G01S

The present search report has been drawn up for all claims

| Place of search | Date of completion of the search | Examiner |
|---|---|---|
| Munich | 12 June 2026 | Ferrara, Michele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 26 15 2647

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2026

| Patent document cited in search report | Publication date | Patent family member(s) | | Publication date |
|---|---|---|---|---|
| US 2021124027 A1 | 29-04-2021 | CA | 3097277 A1 | 28-04-2021 |
| | | CN | 112799034 A | 14-05-2021 |
| | | EP | 3816656 A1 | 05-05-2021 |
| | | IL | 278357 A | 29-04-2021 |
| | | JP | 7125968 B2 | 25-08-2022 |
| | | JP | 2021092543 A | 17-06-2021 |
| | | KR | 20210050478 A | 07-05-2021 |
| | | US | 2021124027 A1 | 29-04-2021 |
| US 2021350165 A1 | 11-11-2021 | CN | 119832043 A | 15-04-2025 |
| | | DE | 112021002781 T5 | 27-04-2023 |
| | | JP | 2023526021 A | 20-06-2023 |
| | | KR | 20230049585 A | 13-04-2023 |
| | | US | 2021350165 A1 | 11-11-2021 |
| | | US | 2021350595 A1 | 11-11-2021 |
| | | WO | 2021231265 A1 | 18-11-2021 |

EPO FORM P0459

For more details about this annex : see Official Journal of the European Patent Office, No. 12/82